# FASCICULE DE BREVET EUROPEEN

(11) **EP 0 493 245 B1**
(45) Date de publication et mention de la délivrance du brevet: **14.12.1994**
(21) Numéro de dépôt: 91403526.6
(22) Date de dépôt: 23.12.1991
(51) Int. Cl.: A47C 7/40

(54) **Perfectionnements aux cadres d'ossature pour dossiers de sièges et analogues et à leurs procédés et dispositifs de fabrication**
Verbesserte Rahmen für Rückenlehnen von Sitzen und Verfahren und Vorrichtung zur Herstellung
Improved frames for backrests of seats and method and device for manufacture

(30) Priorité: 27.12.1990 FR 9016346
(43) Date de publication de la demande: 01.07.1992
(73) Titulaire: BERTRAND FAURE AUTOMOBILE "B.F.A.", F-91300 Massy (FR)
(72) Inventeur: Chales, Bernard, F-61100 Flers (FR)
(74) Mandataire: Behaghel, Pierre

(56) Documents cités:
- DE-C- 3 936 418
- US-A- 3 417 595
- US-A- 3 706 292

## Description

L'invention est relative aux cadres rigides servant d'ossatures pour les composants de sièges d'automobiles, à savoir essentiellement pour les dossiers et assises de ces sièges et éventuellement pour leurs appui-tête et accoudoirs.

Elle vise plus particulièrement, parmi ces cadres, ceux qui sont constitués par des coques elles-mêmes formées par assemblage mutuel de deux demi-coques en tôle emboutie le long de leurs bords juxtaposés qui s'étendent respectivement le long des deux périmètres extérieur et intérieur de chaque demi-coque.

Ces coques en forme de cadres sont avantageuses en ce qu'il est possible d'obtenir en chacun de leurs points une résistance optimum pour une masse donnée de métal en jouant sur le dessin et les dimensions de la section locale correspondante de la coque.

Dans les modes de réalisation connus des cadres-coques considérés, les bords juxtaposés des deux demi-coques se présentent sous la forme de rebords sensiblement plans rabattus vers l'intérieur de la demi-coque correspondante pour le bord intérieur et vers l'extérieur de cette demi-coque pour le bord extérieur.

Les coques obtenues présentent un certain nombre d'inconvénients et en particulier les suivants :
- leurs rebords assemblés constituent des saillies dangeureuses pouvant se comporter comme de véritables lames de couteau, et ce quel que soit l'orientation qui leur est donnée, ce qui peut provoquer des blessures aussi bien lors de la fabrication des coques en question que lors de leurs manipulations ultérieures, de leur garnissage et même lors de la mise en service des sièges correspondants, notamment lors de dégarnissages locaux des sièges correspondants et/ou de l'application de chocs sur les occupants des véhicules équipés de ces sièges,
- par ailleurs l'assemblage mutuel des rebords juxtaposés, qu'il procède par agrafage, par soudure ou autrement, met en oeuvre en général des équipements onéreux,
- enfin la fiabilité de l'assemblage obtenu laisse souvent à désirer.

L'invention a pour but, surtout, de remédier à ces divers inconvénients.

A cet effet, les cadres du genre en question sont essentiellement caractérisés selon l'invention en ce que les rebords juxtaposés des demi-coques qui les constituent sont, sur au moins la plus grande partie de leur longueur, enroulés selon des tubes de section circulaire fermée.

Dans des modes de réalisation avantageux, on a recours en outre à l'une et/ou à l'autre des dispositions suivantes :
- l'un au moins des deux doubles rebords juxtaposés est composé de plusieurs tronçons tubulaires séparés mutuellement par des tronçons plats de faible longueur,
- les tronçons plats ci-dessus sont disposés dans des portions coudées des doubles rebords juxtaposés,
- dans le cas où le cadre constitue l'ossature d'un dossier, les portions coudées sont disposées aux extrémités latérales de la base de ce cadre,
- dans certains au moins de leurs tronçons plats, les rebords juxtaposés sont assemblés mutuellement par des points de soudure,
- les deux demi-coques constituant la coque d'ossature comprennent des zones rentrantes en regard l'une de l'autre dont les fonds sont juxtaposés deux à deux et assemblés mutuellement par des points de soudure,
- les rebords juxtaposés des deux demi-coques sont délimités par des profils sinueux.

Pour ce qui est des procédés de fabrication des bords roulés des coques, c'est-à-dire pour rendre tubulaire chacun des doubles rebords juxtaposés, initialement plats, on a recours avantageusement à la suite des deux étapes successives de formage explicitées ci-après, suite connue, par exemple par le document US-A-3 417 595, pour rendre tubulaires les bords d'une feuille métallique unique destinée à constituer un couvercle de boîte : la première étape effectue un pliage simultané de chacun des deux rebords à 90° à une distance, de sa racine, au moins égale au diamètre désiré pour le tube, et la seconde étape effectue un roulage progressif simultané du pan ainsi plié à 90°, en direction de la coque.

L'invention comprend, mises à part ces dispositions principales, certaines autres dispositions qui s utilisent de préférence en même temps et dont il sera plus explicitement question ci-après.

Dans ce qui suit, on va décrire un mode de réalisation préféré de l'invention en se référant aux dessins ci-annexés d'une manière bien entendu non limitative.

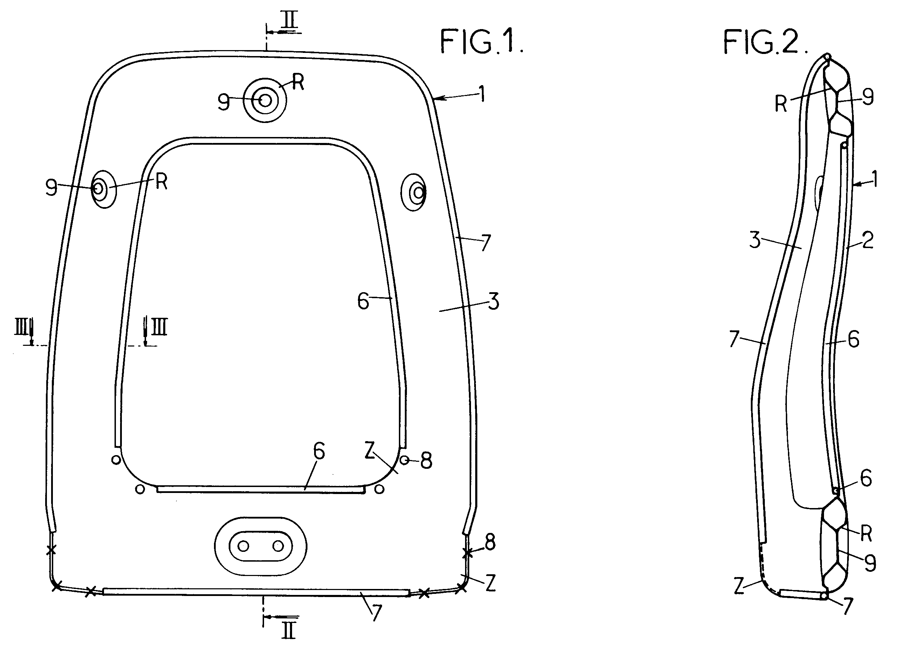

Les figures 1 et 2, de ces dessins, montrent respectivement en vue de face et en coupe verticale médiane selon II-II, figure 1, une ossature de dossier de siège de véhicule établie conformément à l'invention.

La figure 3 est une coupe agrandie de la figure 1 selon III-III, figure 1.

La figure 4 montre l'une des plaques de tôle constitutives de ladite ossature avant sa mise en forme.

Les figures 5 et 6 montrent selon des coupes fortement agrandies les formes prises respectivement par les rebords juxtaposés de l'ossature après la première étape de pliage et en fin de roulage.

Les figures 7 et 8 montrent en coupe verticale et en partie, respectivement deux machines permettant respectivement de plier et de rouler conformément à l'invention les rebords juxtaposés de l'ossature ci-dessus.

D'une façon connue en soi, l'ossature ici considérée, destinée à supporter un coussin de dossier pour siège de véhicule, se présente sous la forme générale d'un cadre ou cuvette sans fond 1 formant une coque annulaire et composée de deux demi-coques 2 et 3 en tôle emboutie (de préférence en aluminium ou alliage d'aluminium) juxtaposées le long de leurs rebords 4 et 5 rabattus respectivement vers l'extérieur pour le rebord extérieur 4 et vers l'intérieur pour le rebord intérieur 5.

Cette ossature en coque présente, par rapport aux ossatures en tubes ou en plaques soudées, l'avantage d'une très grande robustesse pour un poids donné de métal et elle permet très facilement d'ajuster les résistances locales en fonction des besoins, notamment en augmentant ou en diminuant localement certaines au moins des dimensions de la section droite de la coque.

Mais les rebords juxtaposés des deux demi-coques forment généralement des arêtes acérées qui risquent d'une part de blesser les personnes qui doivent manipuler l'ossature et la garnir, voire même les occupants du véhicule équipé par le siège terminé correspondant, et d'autre part de couper ou déchirer localement les garnissages qui les recouvrent.

De plus la solidité de l'assemblage mutuel de ces rebords, exécuté entre deux surfaces juxtaposées planes ou sensiblement telles, est souvent peu fiable.

Pour remédier à ces inconvénients, conformément à l'invention, on roule ou "roulotte" au moins localement les rebords juxtaposés en question en les transformant en tronçons tubulaires internes 6 et externes 7 de section circulaire fermée.

Cette opération de roulage ou roulottage est effectuée après juxtaposition mutuelle des deux rebords 4 et 5 de forme plane ou sensiblement plane et elle assure par elle-même l'assemblage mutuel de ces deux rebords.

L'ossature à bords roulés ou tubulaire 6,7 ainsi obtenue présente de nombreux avantages et en particulier les suivants :
- du fait de leur profil extérieur arrondi, les bords roulés en question ne sont plus agressifs, ce qui supprime les risques de blessure et facilite considérablement les manipulations et opérations ultérieures (garnissage, montage), en écartant également les risques de déchirure de l'habillage de l'ossature,
- l'assemblage obtenu des deux demi-coques entre elles le long de leurs bords roulés est très solide et peut être réalisé d'une façon automatique très simple, ainsi qu'il sera explicité ci-après,
- les bords roulés formés augmentent par eux-mêmes la rigidité globale de l'ossature.

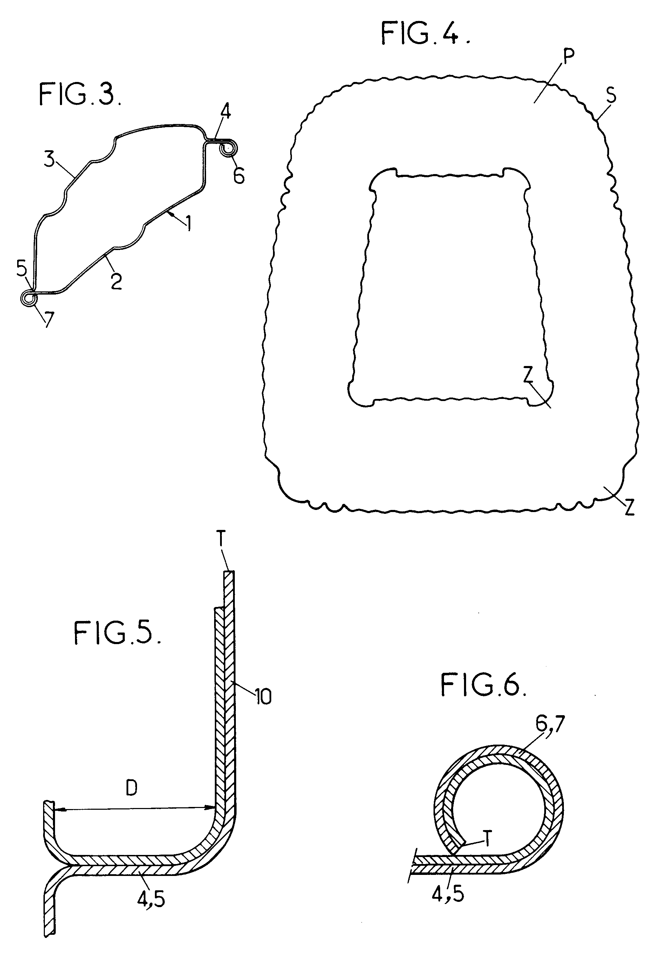

Pour faciliter l'opération de roulage et éviter la formation de fronces ou replis locaux -formation due au fait que les rebords juxtaposés à rouler ne sont pas rectilignes-, il est avantageux de donner aux contours de ces rebords une forme sinueuse ou encochée telle que visible en S sur la figure 4, qui montre la forme de la plaque P découpée en couronne destinée à constituer l'une des deux demi-coques 2 et 3, avant sa mise en forme : grâce à cette mesure, les volumes de métal qui risqueraient de créer des surépaisseurs dans celui-ci lors du roulage, provoquent un comblement partiel des vides ou creux réservés entre les dents ou autres saillies dans les profils sinueux indiqués.

Dans le même but de simplifier l'opération de roulage, on interrompt avantageusement celle-ci dans les zones Z coudées sensiblement à angle droit qui se trouvent en bas de l'ossature, zones qui sont au nombre de quatre, savoir deux à l'intérieur et deux à l'extérieur de ladite ossature.

Pour renforcer cette dernière, on réalise avantageusement des points de soudure complémentaires 8 sur les tronçons, des rebords juxtaposés, qui, dans les zones Z, sont simplement juxtaposés et non roulés.

Dans le même but de renforcement, on prévoit avantageusement dans les deux demi-coques des zones rentrantes R mutuellement en regard dont les fonds viennent en contact mutuel et on assemble ces fonds entre eux à l'aide de points de soudure 9.

Pour réaliser le roulage des rebords juxtaposés intérieur 4 et extérieur 5, on procède avantageusement comme suit :
- on replie d'abord simultanément à 90° chacun de ces doubles rebords le long d'une ligne de pliage disposée à une distance suffisante, de la coque, pour permettre le roulage ultérieur en direction de celle-ci,
- et on recourbe progressivement vers la coque, simultanément, les deux pans doubles ainsi rabattus à 90° en repoussant progressivement vers la coque ces pans doubles à l'aide d'outils à plages incurvées rentrantes qui attaquent en premier lieu les tranches T desdits pans -ou tout au moins la tranche du rebord le plus éloigné de la coque, qui est prévu à cet effet légèrement débordant et qui enveloppe l'autre rebord-, les déplacements desdits outils étant guidés parallèlement aux pans considérés.

Sur la figure 5 on voit un double pan 10 ainsi plié à 90° et formant la bordure de l'une des paires de rebords juxtaposés 4 et 5.

Sur la figure 6 on voit un bord roulé 6,7 obtenu par roulage d'un tel pan 10.

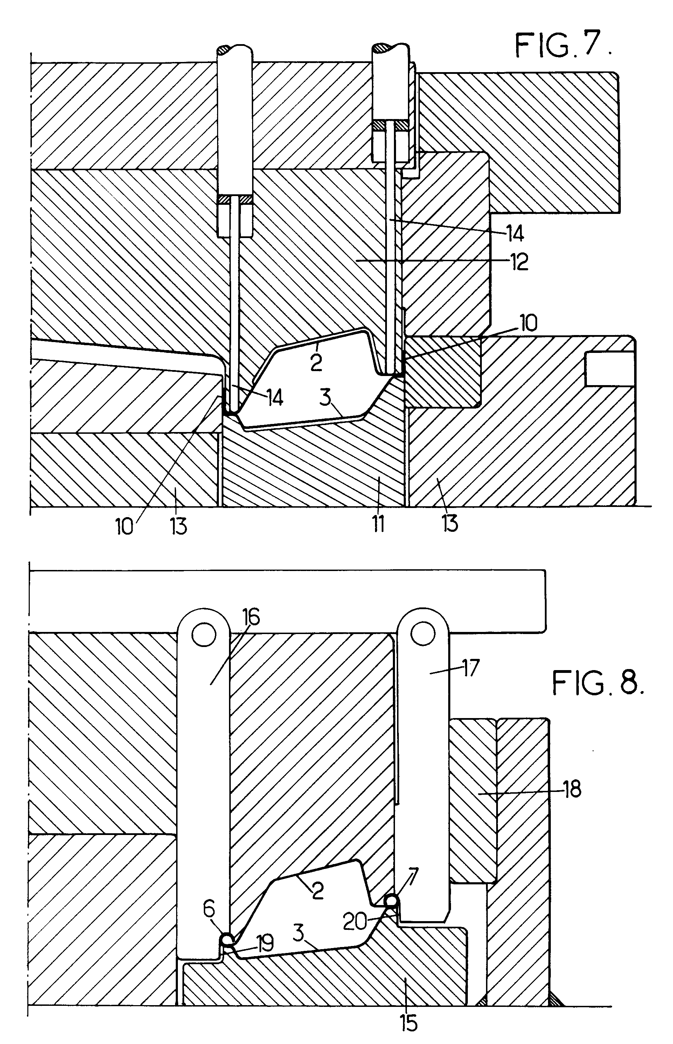

Les figures 7 et 8 montrent respectivement une machine de pliage permettant d'obtenir les doubles pans 10 pliés à 90° et une machine de roulage permettant d'obtenir les bords roulés à partir desdits doubles pans 10.

La première machine comprend une embase 11 (figure 7) conformée de façon à recevoir l'une 3 des deux demi-coques 2 et 3 recouverte par l'autre demi-coque avec juxtaposition mutuelle de leurs rebords respectifs intérieurs 4 et extérieurs 5 qui, initialement, sont sensiblement plans et horizontaux.

Cette machine comprend également un couvercle ou poinçon 12 propre à venir recouvrir jointivement l'autre demi-coque 2 et à abaisser l'ensemble à l'intérieur d'une matrice 13.

Comme bien visible sur la figure 7, la cavité de la matrice 13 dans laquelle l'ensemble verticalement mobile est introduit présente des parois verticales propres à longer aussi bien intérieurement qu'extérieurement l'ensemble de deux demi-coquilles 2,3 à une distance, du couvercle 12, qui est sensiblement égale à l'épaisseur des rebords juxtaposés à plier.

Le pliage désiré est alors obtenu par le simple abaissement indiqué.

Des tiges-poussoirs 14 prenant appui sur le dessus des portions non repliées des bords juxtaposés permettent de dégager le couvercle 12 tout en laissant en place la demi-coquille 2 sur la demi-coquille 3.

La machine de la figure 8 comprend un socle 15 qui, cette fois-ci, est fixe et propre à servir de support à la coque en cours de formation, c'est-à-dire composée des deux demi-coques 2 et 3 emboîtées l'une dans l'autre au niveau de leurs pans 10 pliés verticalement vers le haut.

Cette machine comprend en outre des cames 16,17 montées verticalement mobiles dans un guide 18 et propres à venir d'abord coiffer jointivement, puis repousser horizontalement vers la coque, les tranches supérieures des pans repliés 10.

La section droite du profil 19,20 de chaque came comprend un tronçon rectiligne vertical prolongé vers le haut par un arc de cercle de 90° dont le rayon est égal à celui du bord roulé 6 ou 7 à former.

Les deux cames 16 et 17 sont disposées de façon telle qu'elles attaquent simultanément les tranches des pans 10 à déformer et qu'elles assurent donc simultanément les roulages de ces deux pans, c'est-à-dire la formation des deux rebords roulés 6 et 7.

La section droite de ces rebords roulés est circulaire, le rayon du cercle correspondant étant généralement compris entre 2 et 8 mm, et notamment de l'ordre de 3,5 mm pour une épaisseur de tôle de 0,5 mm.

Les portions enroulées des doubles rebords roulés ou tubulaires 6,7 s'étendent sur un arc suffisant pour que les tronçons tubulaires correspondants soient "fermés" latéralement, c'est-à-dire pour que les tranches T desdits rebords viennent au moins en contact avec la plage en regard des racines non déformées desdits rebords, ainsi que visible sur la figure 6.

Ledit arc est alors de l'ordre de 315°.

Mais il pourrait être bien supérieur et en particulier le roulage pourrait être effectué sur plus d'un tour et atteindre par exemple un tour et demi ou deux tours aux fins de rigidification et de consolidation de l'assemblage.

En suite de quoi, et quel que soit le mode de réalisation adopté, on obtient finalement un cadre d'ossature en coque à bords roulés dont la constitution, la fabrication et les avantages résultent suffisament de ce qui précède.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse au contraire toutes les variantes, telles que décrites dans les revendications, notamment celles où l'un au moins des deux doubles rebords roulés intérieur et extérieur de l'ossature en coque s'étendrait sur la totalité du contour intérieur ou extérieur correspondant au lieu d'être interrompu par des tronçons plats, c'est-à-dire non roulés, comme décrit ci-dessus.

## Revendications

1. Cadre rigide servant d'ossature pour un composant de siège d'automobile, constitué par une coque elle-même formée par assemblage mutuel de deux demi-coques (2,3) en tôle emboutie le long de leurs rebords juxtaposés (4,5) qui s'étendent respectivement le long des deux périmètres extérieur et intérieur de chaque demi-coque, caractérisé en ce que les rebords juxtaposés des demi-coques sont, sur au moins la plus grande partie de leur longueur, enroulés selon des tubes de section circulaire fermée (6,7).

2. Cadre selon la revendication 1, caractérisé en ce que l'un au moins des deux doubles rebords juxtaposés est composé de plusieurs tronçons tubulaires (6,7) séparés mutuellement par des tronçons plats de faible longueur.

3. Cadre selon la revendication 2, caractérisé en ce que les tronçons plats sont disposés dans des portions coudées (Z) des doubles rebords juxtaposés.

4. Cadre selon la revendication 3, constituant l'ossature d'un dossier, caractérisé en ce que les portions coudées (Z) sont disposées aux extrémités latérales de la base de ce cadre.

5. Cadre selon l'une quelconque des revendications 2 à 4, caractérisé en ce que, dans certains au moins de ses tronçons plats, les rebords juxtaposés sont assemblés mutuellement par des points de soudure (8).

6. Cadre selon l'une quelconque des précédentes revendications, caractérisé en ce que les deux demi-coques (2,3) qui le constituent comprennent des zones rentrantes (R) en regard l'une de l'autre dont les fonds sont juxtaposés deux à deux et assemblés mutuellement par des points de soudure (9).

7. Cadre selon l'une quelconque des précédentes revendications, caractérisé en ce que les rebords juxtaposés (4,5) des deux demi-coques (1,2) sont délimités par des profils sinueux (S).

8. Procédé pour fabriquer un cadre à rebords roulés selon l'une quelconque des précédentes revendications, caractérisé en ce que l'on procède par deux étapes successives de formage, la première étape effectuant un pliage simultané de chacun des deux doubles rebords à 90° à une distance, de sa racine, au moins égale au diamètre désiré pour le tube, et la seconde étape effectuant un roulage progressif simultané du pan ainsi plié à 90°, en direction de la coque.

## Claims

1. Rigid frame serving as a framework for a car seat component, the frame being constituted by a shell itself being made up by assembling together two half-shells (2, 3) of stamped sheet metal along their juxtaposed edge flanges (4, 5) which extend respectively along an inside perimeter and an outside perimeter of each of the half-shells, characterized in that the juxtaposed flanges of the half-shells are rolled up into tubes of closed circular section (6, 7) at least over the major portion of their length.

2. Frame according to claim 1, characterized in that at least one of the two pairs of juxtaposed flanges is constituted by a plurality of tubular lengths (6, 7) that are separated from one another by flat portions that are short in length.

3. Frame according to claim 2, characterized in that the flat lengths are disposed in the corner portions (Z) of the pairs of juxtaposed flanges.

4. Frame according to claim 3, constituting the framework of a seat back, characterized in that the corner portions (Z) are disposed at the side ends of the base of the frame.

5. Frame according to any one of claims 2 to 4, characterized in that, in at least some of their flat lengths, the juxtaposed flanges are assembled together by spot welds (8).

6. Frame according to any one of the preceding claims, characterized in that the two half-shells (2, 3) constituting said frame include mutually facing reentrant zones (R) whose bottoms are juxtaposed in pairs and are assembled together by spot welds (9).

7. Frame according to any one of the preceding claims, characterized in that the juxtaposed flanges (4, 5) of the two half-shells (1, 2) are delimited by scalloped profiles (S).

8. Method of manufacturing a frame having edge flanges that are rolled up according to any one of the preceding claims, characterized in that two successive forming steps are performed, the first step consisting in simultaneously folding each of the two pairs of flanges through 90° at a distance from the base thereof that is not less than the desired diameter for the tube; and the second step being progressively rolling up simultaneously the resulting 90° folded flat towards the shell.

## Patentansprüche

1. Starrer Rahmen, der als Gestell für einen Bestandteil eines Kraftfahrzeugsitzes dient und aus einer Schale besteht, die selbst durch gegenseitiges Zusammenfügen von zwei Halbschalen (2, 3) aus Blech gebildet ist, das in Längsrichtung der nebeneinander gelegten Ränder (4, 5) der Halbschalen, die sich jeweils längs der beiden äußeren und inneren Umrisse jeder Halbschale erstrecken, gebördelt ist, dadurch gekennzeichnet, daß die nebeneinander liegenden Ränder der Halbschalen über wenigstens den größeren Teil ihrer Länge zu Rohren (6, 7) mit einem kreisförmigen, geschlossenen Querschnitt aufgerollt sind.

2. Rahmen nach Anspruch 1, dadurch gekennzeichnet, daß wenigstens einer der beiden doppelten nebeneinander liegenden Ränder aus mehreren rohrförmigen Stücken (6, 7) besteht, die voneinander durch flache Stücke mit geringer Länge getrennt sind.

3. Rahmen nach Anspruch 2, dadurch gekennzeichnet, daß die flachen Stücke an den gebogenen Abschnitten (Z) der doppelten nebeneinander liegenden Ränder angeordnet sind.

4. Rahmen nach Anspruch 3 für das Gestell einer Rückenlehne, dadurch gekennzeichnet, daß die gebogenen Abschnitte (Z) an den seitlichen Enden der Basis dieses Rahmens angeordnet sind.

5. Rahmen nach einem der vorhergehenden Ansprüche 2 bis 4, dadurch gekennzeichnet, daß wenigstens an einigen flachen Stücken die nebeneinander liegenden Ränder durch Schweißpunkte (8) zusammengefügt sind.

6. Rahmen nach einem der vorhergehenden Ansprüche, dadurch gekennzeichnet, daß die beiden Halbschalen (2, 3), die den Rahmen bilden, einspringende Zonen (9) enthalten, deren Böden paarweise nebeneinander liegen und miteinander durch Schweißpunkte (9) verbunden sind.

7. Rahmen nach einem der vorhergehenden Ansprüche, dadurch gekennzeichnet, daß die nebeneinander liegenden Ränder (4, 5) der beiden Halbschalen (1, 2) durch sinusförmige Profile (S) begrenzt sind.

8. Verfahren zur Herstellung eines Rahmens mit aufgerollten Rändern nach einem der vorhergehenden Ansprüche, dadurch gekennzeichnet, daß es in zwei aufeinanderfolgenden Verformungsstufen durchgeführt wird, wobei in der ersten Stufe die beiden doppelten Ränder bei einer Entfernung von dem Fußpunkt, die wenigstens gleich dem gewünschten Rohrdurchmesser ist, gleichzeitig um 90° gebogen und in der zweiten Stufe die bereits auf 90° gebogene Bahn nach und nach gleichzeitig in Richtung der Schale aufgerollt wird.
